# EUROPÄISCHE PATENTSCHRIFT

(11) **EP 2 953 222 B1**
(45) Veröffentlichungstag und Bekanntmachung des Hinweises auf die Patenterteilung: **22.01.2020**
(21) Anmeldenummer: 15166737.5
(22) Anmeldetag: 07.05.2015
(51) Int. Cl.: H02G 3/18

(54) **GERÄTEBECHER FÜR ELEKTRISCHE INSTALLATIONSGERÄTE UND VERFAHREN ZUM HERSTELLEN EINES GERÄTEBECHERS**
DEVICE HOLDER FOR ELECTRICAL INSTALLATION DEVICES AND METHOD FOR PRODUCING A DEVICE HOLDER
PANIER D'APPAREILLAGE POUR APPAREILS D'INSTALLATION ÉLECTRIQUES ET PROCÉDÉ DE FABRICATION D'UN PANIER D'APPAREILLAGE

(30) Priorität: 06.06.2014 DE 102014210931
(43) Veröffentlichungstag der Anmeldung: 09.12.2015
(73) Patentinhaber: OBO Bettermann GmbH & Co. KG, 58710 Menden (DE)
(72) Erfinder: Beckmeyer, Karl-Heinz, 58566 Kierspe (DE); Raschke, Jörg, 51674 Wiehl (DE); Stiens, Ingolf, 59494 Soest (DE)
(74) Vertreter: Patentanwälte Ruff, Wilhelm, Beier, Dauster & Partner mbB

(56) Entgegenhaltungen:
- EP-A2- 2 073 334
- WO-A2-2011/012778
- DE-A1- 4 328 447
- DE-A1- 10 135 662
- DE-U1-202011 102 159
- GB-A- 2 450 558

## Beschreibung

Die Erfindung betrifft einen Gerätebecher für elektrische Installationsgeräte mit jeweils wenigstens einem Vorsprung an gegenüberliegenden Enden des Gerätebechers, wobei die Vorsprünge zum Einhängen des Gerätebechers in Montageöffnungen einer Unterflurkassette vorgesehen sind. Die Erfindung betrifft auch ein Verfahren zum Herstellen eines Gerätebechers für elektrische Installationsgeräte mittels Kunststoffspritzguss.

Aus der europäischen Offenlegungsschrift EP 2 538 510 A2 ist ein Gerätebecher für elektrische Installationsgeräte bekannt, bei dem an beiden Enden des Gerätebechers jeweils ein Verriegelungsschieber vorgesehen ist, mit dem der Gerätebecher an Rastleitern verrastet oder wieder gelöst werden kann. Zum Verrasten des Gerätebechers wird der Verriegelungsschieber von einer Einbauposition in eine Verriegelungsposition verschoben.

Aus der internationalen Offenlegungsschrift WO 2011/012778 A2 ist ein Gerätebecher für elektrische Installationsgeräte mit jeweils wenigstens einem Vorsprung an gegenüberliegenden Enden des Gerätebechers bekannt, wobei die Vorsprünge zum Einhängen des Gerätebechers in Montageöffnungen einer Unterflurkassette vorgesehen sind.

Aus der europäischen Offenlegungsschrift EP 2 073 334 A2 ist eine Halterung für eine elektrische Steckdose bekannt, die in einer hinterschnittenen Nut einer Bodenschiene verankert werden kann. Hierzu weist die Halterung zwei Rastnasen an elastischen Rastarmen auf, wobei die Rastarme parallel von der Halterung weg verlaufen und die Rastnasen auf den Hinterschnitt der Nut abgestimmt sind. Die Rastarme mit den Rastnasen können in die hinterschnittene Nut eingeführt werden. Beim Einfedern werden die Rastarme aufeinander zubewegt, um den Rastnasen den Durchgang durch die Öffnung der Nut zu ermöglichen. Nachdem die Rastnasen so weit in die Nut eingedrungen sind, dass sie die Öffnung der Nut hintergreifen, federn die Rastarme auf, so dass die Rastnasen die Öffnung hintergreifen. Um nun zu verhindern, dass die Halterung einfach wieder aus der Nut herausgezogen werden kann, ist ein drehbarer Hebel vorgesehen. Ein Verriegelungsabschnitt des Hebels wird zwischen die beiden Rastarme bewegt und verhindert dadurch, dass die Rastarme aufeinander zubewegt werden können. Dadurch können die Rastnasen nicht aus der Position, in der sie die Öffnung der Nut hintergreifen, bewegt werden und die Halterung ist zuverlässig an der hinterschnittenen Nut festgelegt. Wird der Verrie gelungsabschnitt in eine Freigabestellung bewegt, in der er sich nicht mehr zwischen den Rastarmen befindet, können die Rastarme wieder nach innen ausgelenkt werden und die Rastnasen können die Öffnung der hinterschnittenen Nut passieren.

Aus der britischen Offenlegungsschrift GB 2 450 558 A ist ein Gerätebecher für elektrische Installationsgeräte bekannt, der an beiden Enden Vorsprünge aufweist, mit denen er in Rastleitern einer Unterflurkassette eingehängt werden kann. Die Vorsprünge können zwischen einer ersten, zurückgezogenen Stellung und einer zweiten, vorgeschobenen Stellung, in der sie in Montageöffnungen in der Rastleiter der Unterflurkassette eingreifen, verschoben werden.

Aus der deutschen Offenlegungsschrift DE 101 35 662 A1 ist ein Gerätebecher für elektrische Installationsgeräte bekannt, der in Rastleitern einer Unterflurkassette eingehängt werden kann. Der Gerätebecher weist Mittel zur Festlegung an der Rastleiter einer Unterflurkassette auf, die in eine Verriegelungsposition überführbar sind.

Aus der deutschen Offenlegungsschrift DE 43 28 447 A1 ist ein Gerätebecher für elektrische Installationsgeräte bekannt, der Vorsprünge zum Einhängen des Gerätebechers in die Öffnungen einer Rastleiter einer Unterflurkassette aufweist. Die Vorsprünge weisen Rastnasen auf, die im montierten Zustand die Montageöffnungen in den Rastleitern hintergreifen können.

Aus der deutschen Gebrauchsmusterschrift DE 20 2011 102 159 U1 ist ein Gerätebecher für elektrische Installationsgeräte bekannt, der an beiden Enden Vorsprünge aufweist, die in Montageöffnungen einer Rastleiter einer Unterflurkassette eingeschoben werden können. Die Vorsprünge können mittels eines Schiebers blockiert oder freigegeben werden. Mittels des Schiebers können die Vorsprünge somit blockiert werden, wenn sie in Montageöffnungen einer Rastleiter eingehängt sind.

Mit der Erfindung soll ein zuverlässig und mehrfach an Rastleitern verriegelbarer Gerätebecher bereitgestellt werden, der eine sichere Verriegelung ermöglicht und der kostengünstig herstellbar ist. Mit der Erfindung soll auch ein Verfahren zum Herstellen eines solchen Gerätebechers angegeben werden.

Erfindungsgemäß ist hierzu ein Gerätebecher für elektrische Installationsgeräte mit den Merkmalen von Anspruch 1 vorgesehen. Es ist ein Gerätebecher mit jeweils wenigstens einem Vorsprung an gegenüberliegenden Enden des Gerätebechers vorgesehen, wobei die Vorsprünge zum Einhängen des Gerätebechers in Montageöffnungen, insbesondere horizontal angeordnete Öffnungen oder Schlitze von Rastleistern, einer Unterflurkassette vorgesehen sind, bei dem an wenigstens einem Ende des Gerätebechers im Bereich des wenigstens einen Vorsprungs ein relativ zum Gerätebecher drehbarer Hebel zum Verriegeln des Gerätebechers an den Rastleitern vorgesehen ist, wobei ein Verriegelungsabschnitt des Hebels in einer ersten Freigabestellung im Wesentlichen fluchtend zu dem wenigstens einen Vorsprung angeordnet ist und in einer zweiten Verriegelungsstellung schräg oder senkrecht zu dem Vorsprung angeordnet ist.

Das Vorsehen eines drehbaren Hebels ermöglicht bei einfacher Bedienung eine sehr sichere, zuverlässige und dabei wieder lösbare Verrastung an den Rastleitern. Ein großer Vorteil der erfindungsgemäßen Lösung ist, dass die Rastleitern lediglich mit schlitzartigen Öffnungen versehen sein müssen, aber keinerlei Rastvorsprünge oder dergleichen aufweisen müssen. Es ist dadurch möglich, den erfindungsgemäßen Gerätebecher sowohl in Verbindung mit Rastleitern aus Kunststoff als auch mit Rastleitern aus Metall einzusetzen. Der erfindungsgemäße Gerätebecher ist auch kompatibel mit den bereits bekannten Rastleitersystemen. Der Hebel zum Verriegeln ist so ausgestaltet, dass er in der Verriegelungsstellung die Öffnung in der Rastleiter hintergreift. In diesem verriegeltem Zustand ist es somit unmöglich, den Gerätebecher zerstörungsfrei von der Rastleiter zu entfernen. In der Freigabestellung liegt der Hebel dahingegen fluchtend zu dem wenigstens einen Vorsprung am Gerätebecher und der Gerätebecher kann dadurch in sehr einfacher Weise aus der Öffnung der Rastleiter herausgezogen werden. Durch die Verriegelung mittels eines drehbaren Hebels ist es möglich, die Vorsprünge am Gerätebecher sowie auch den Hebel selbst so auszubilden, dass die Vorsprünge und der Hebel genau in die Öffnungen der Rastleister hineinpassen. Es ist insbesondere nicht erforderlich, für das Einklipsen von Rasthaken mit Hinterschnitten ein erhöhtes Spiel vorzusehen, da die Verriegelung mittels einer einfachen Drehung des Hebels erfolgt. Der Gerätebecher kann mittels seiner Vorsprünge dadurch im Wesentlichen spielfrei in den Rastleitern aufgenommen werden und auch die Vorsprünge können sehr stabil ausgeführt werden, um einen zuverlässigen Halt des Gerätebechers an den Rastleitern zu gewährleisten. Dies ist speziell dann von Bedeutung, wenn in dem Gerätebecher Steckdosen für Schutzkontaktstecker, gegebenenfalls sogar mit Kindersicherung, vorgesehen sind, die erhebliche Kräfte vor allem beim Einstecken in die Steckdose erfordern.

In Weiterbildung der Erfindung ist eine Hebelwelle des Hebels im Wesentlichen parallel zu einer von dem ersten Ende zum zweiten Ende des Gerätebechers verlaufenden Längsrichtung angeordnet. Ein Verriegelungsabschnitt des Hebels führt dadurch eine Drehung um eine zur Längsrichtung parallele Achse aus und kann dadurch für eine sichere Verriegelung sorgen.

In Weiterbildung der Erfindung ist der Hebel relativ zum Gerätebecher parallel zu dessen Längsachse verschiebbar.

Auf diese Weise kann nach dem Einhängen der Vorsprünge des Gerätebechers in die Öffnungen der Rastleiter der Hebel parallel zur Längsachse verschoben werden, so dass sein Verriegelungsabschnitt hinter der Öffnung der Rastleiter angeordnet ist und diese dann durch eine einfache Drehung des Hebels hintergreifen kann. Beim Einhängen des Gerätebechers in die Rastleitern ist der Hebel aber noch zurückgezogen, zweckmäßigerweise auf Höhe der Vorderkante der Vorsprünge oder sogar noch davor, so dass der Verriegelungsabschnitt des Hebels beim Einsetzen der Vorsprünge in die Rastleitern geschützt ist.

In Weiterbildung der Erfindung sind an wenigstens einem Ende des Gerätebechers zwei senkrecht zur Längsrichtung nebeneinander angeordnete Vorsprünge vorgesehen, wobei der Verriegelungsabschnitt in der Freigabestellung fluchtend zwischen den beiden Vorsprüngen angeordnet ist.

Das Vorsehen von zwei nebeneinander angeordneten Vorsprüngen mit dem dazwischen angeordneten Verriegelungsabschnitt des Hebels sorgt zum einen durch die Beabstandung der Vorsprünge für einen sicheren Halt des Gerätebechers in der Öffnung der Rastleiter, insbesondere auch gegen Verkippen des Gerätebechers um dessen Längsachse. Der Verriegelungsabschnitt des Hebels ist aber auch beim Einsetzen des Gerätebechers in die Rastleitern geschützt zwischen den Vorsprüngen angeordnet.

In Weiterbildung der Erfindung ist die Hebelwelle in einer Stirnwand des Gerätebechers drehbar gelagert.

Auf diese Weise lässt sich die drehbare Anordnung des Hebels bzw. der Hebelwelle in besonders einfacher Weise und ohne zusätzliche Bauteile realisieren. Vorteilhafterweise ist die Hebelwelle in einem Führungsabschnitt auf ihrem gesamten Umfang von einem einstückigen Abschnitt der Stirnwand umgeben. Eine solche Ausbildung des Gerätebechers wird durch ein Mehrkomponentenspritzgussverfahren erreicht. Der erfindungsgemäße Gerätebecher kann dadurch schnell und kostengünstig in einem einzigen Spritzgusswerkzeug hergestellt werden.

In Weiterbildung der Erfindung ist an einer, dem Innenraum des Gerätebechers zugewandten Seite der Stirnwand ein ringabschnittsförmiger Kragen vorgesehen, der sich über weniger als 360° erstreckt und der für einen Betätigungsabschnitt des Hebels zwei, eine Drehung des Hebels begrenzende, Endanschläge definiert.

Mittels eines solchen Kragens lassen sich definierte Endanschläge für den Hebel bereitstellen und der Kragen kann darüber hinaus auch für einen Schutz und eine Führung des Hebels bzw. der Hebelwelle sorgen.

In Weiterbildung der Erfindung ist in dem Kragen ein kreiszylinderförmiger Abschnitt der Hebelwelle mit einem ersten Durchmesser aufgenommen, an den sich ein ebenfalls kreiszylinderförmiger Abschnitt der Hebelwelle mit einem zweiten, kleineren Durchmesser anschließt, der in der Stirnwand des Gerätebechers drehbar gelagert ist.

Eine solche Ausbildung sorgt durch die beiden kreiszylinderförmigen Abschnitte nicht nur für eine sichere Führung um die Drehachse der Hebelwelle, sondern auch dafür, dass beim Verschieben des Hebels parallel zur Längsrichtung ein Anschlag für die Hebelwelle bereitgestellt ist, so dass sich der Verriegelungsabschnitt um einen vordefinierten Verschiebeweg verschieben lässt.

In Weiterbildung der Erfindung weist der Betätigungsabschnitt des Hebels einen sich ausgehend von der Hebelwelle im Wesentlichen senkrecht zur Hebelwelle erstreckenden, kreissektorartigen Abschnitt auf.

Ein solcher kreissektorartiger Abschnitt kann leicht ergriffen werden und stellt dabei einen stabilen Betätigungsabschnitt bereit.

Bei dem erfindungsgemäßen Verfahren zum Herstellen eines Gerätebechers für elektrische Installationsgeräte mittels Kunststoffspritzguss sind folgende Schritte vorgesehen:
- Spritzgießen eines Basisteils des Gerätebechers aus einem ersten Kunststoff mittels eines Spritzgusswerkzeugs,
- Spritzgießen wenigstens eines Verriegelungselements des Gerätebechers aus einem zweiten Kunststoff mittels des Spritzgusswerkzeugs, so dass das Verriegelungselement im Bereich eines Führungsabschnitts über seinen gesamten Umfang von dem ersten Kunststoff umgeben ist, wobei die beiden Kunststoffe beim Verfestigen unterschiedlich stark schwinden, so dass nach dem Verfestigen des ersten und des zweiten Kunststoffs das Verriegelungselement im Führungsabschnitt relativ zum Basisteil beweglich ist.

Überraschenderweise gelingt es durch das erfindungsgemäße Verfahren, zwei zueinander bewegliche Bauteile, nämlich das Basisteil des Gerätebechers und das Verriegelungselement, in einem einzigen Spritzgusswerkzeug aber aus zwei unterschiedlichen Kunststoffmaterialien zu spritzen und dennoch sicherzustellen, dass das Basisteil und das Verriegelungselement nach dem Verfestigen relativ zueinander beweglich sind. Gewählt werden dabei Kunststoffe, die unterschiedlich stark schwinden, so dass nach dem Verfestigen ein Spiel zwischen dem Verriegelungselement und dem Basisteil vorhanden ist. Dieses Spiel reicht dann aus, um die relative Beweglichkeit sicherzustellen. Es ist dabei nicht vorgesehen, das Verriegelungselement und das Basisteil beispielsweise mittels eines Filmscharniers zu verbinden. Vielmehr soll das Basisteil das Verriegelungselement im Bereich eines Führungsabschnitts über seinen gesamten Umfang umgeben und das Basisteil und das Verriegelungselement sollen aus verschiedenen Kunststoffen bestehen, die sich beim Spritzgießen nicht stoffschlüssig verbinden. Dadurch lässt sich eine besonders sichere Führung des Verriegelungselements an dem Basisteil ohne zusätzliche und separate Bauteile sicherstellen.

In Weiterbildung der Erfindung erfolgt das Spritzgießen des Basisteils vor dem Verriegelungselement. Beispielsweise ist das Verriegelungselement als Hebel und der Führungsabschnitt als Hebelwelle ausgebildet, wobei zunächst das Basisteil mit einer kreisrunden Durchgangsöffnung gespritzt wird und wobei beim Spritzen des Hebels das zweite Kunststoffmaterial in die Durchgangsöffnung eintritt und dort wenigstens einen Abschnitt der Hebelwelle bildet.

In Weiterbildung der Erfindung erfolgt das Spritzgießen des Verriegelungselements vor dem Basisteil. Beispielsweise ist das Verriegelungselement als Hebel und der Führungsabschnitt als Hebelwelle ausgebildet, wobei zunächst der Hebel mit der kreiszylindrischen Hebelwelle gespritzt wird und dann beim Spritzen des Basisteils die Hebelwelle mit dem ersten Kunststoff umgeben wird.

Beide vorstehend geschilderten Alternativen ermöglichen es, eine relative Beweglichkeit von Verriegelungselement und Basisteil bei gleichzeitig unverlierbarer Anordnung des Verriegelungselements am Basisteil sicherzustellen.

In Weiterbildung der Erfindung ist der erste Kunststoff ein Polyamid und der zweite Kunststoff ein Polyoximethylen (POM).

Mit diesen beiden Kunststoffen lassen sich sehr gute Ergebnisse erzielen, wobei die Erfindung nicht auf Polyamide und Polyoximethylene beschränkt ist. Wesentlich ist, dass die verwendeten Kunststoffe beim Verfestigen unterschiedlich stark schwinden.

In Weiterbildung der Erfindung verbindet sich das erste Kunststoffmaterial nicht mit dem zweiten Kunststoffmaterial.

Auf diese Weise und in Verbindung mit den unterschiedlichen Schwundraten der beiden Kunststoffe lässt sich die relative Beweglichkeit von Verriegelungselement und Basisteil nach dem Zweikomponentenspritzgussvorgang noch deutlich verbessern. Wesentlich ist, dass sich die beiden Kunststoffe, insbesondere Polyamid und Polyoximethylen, beim Spritzgießen nicht stoffschlüssig verbinden, so dass nach dem Schwinden im Lauf der Verfestigung ein geringes Spiel zwischen Verriegelungselement und Basisteil vorhanden ist.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht eines erfindungsgemäßen Gerätebechers mit elektrischen Installationsgeräten von schräg vorne,
- Fig. 2: den Gerätebecher der Fig. 1 in auseinandergezogener Darstellung,
- Fig. 3: eine Ansicht eines erfindungsgemäßen Gerätebechers in einer Freigabestellung des Verriegelungshebels von schräg oben,
- Fig. 4: eine vergrößerte Darstellung der Einzelheit A aus Fig. 3,
- Fig. 5: den Gerätebecher der Fig. 3 mit dem Verriegelungshebel in einer Zwischenstellung,
- Fig. 6: eine vergrößerte Darstellung der Einzelheit B aus Fig. 5,
- Fig. 7: den Gerätebecher der Fig. 3 mit dem Verriegelungshebel in einer Verriegelungsstellung,
- Fig. 8: eine vergrößerte Darstellung der Einzelheit C aus Fig. 7,
- Fig. 9: einen erfindungsgemäßen Gerätebecher vor dem Einhängen in eine Rastleiter, einer Unterflurkassette von schräg oben
- Fig. 10: eine vergrößerte Darstellung der Einzelheit A aus Fig. 9,
- Fig. 11: den Gerätebecher der Fig. 9 nach dem Einhängen in die Rastleiter, aber noch vor dem Verriegeln des Verriegelungshebels,
- Fig. 12: eine vergrößerte Darstellung der Einzelheit B aus Fig. 11,
- Fig. 13: den Gerätebecher der Fig. 9 im eingehängten und verriegelten Zustand der Rastleiter,
- Fig. 14: eine vergrößerte Darstellung der Einzelheit C aus Fig. 13,
- Fig. 15: eine Ansicht des Gerätebechers der Fig. 9 von oben vor dem Einhängen in die Rastleiter,
- Fig. 16: eine Ansicht auf die Schnittebene D-D in Fig. 15,
- Fig. 17: eine Ansicht des Gerätebechers der Fig. 11 von oben nach dem Einhängen in die Rastleiter, aber noch vor dem Verriegeln des Verriegelungshebels,
- Fig. 18: eine Ansicht auf die Schnittebene A-A in Fig. 17,
- Fig. 19: eine Ansicht von oben auf den Gerätebecher der Fig. 13 im eingehängten und verriegelten Zustand an der Rastleiter und
- Fig. 20: eine Ansicht auf die Schnittebene C-C in Fig. 19.

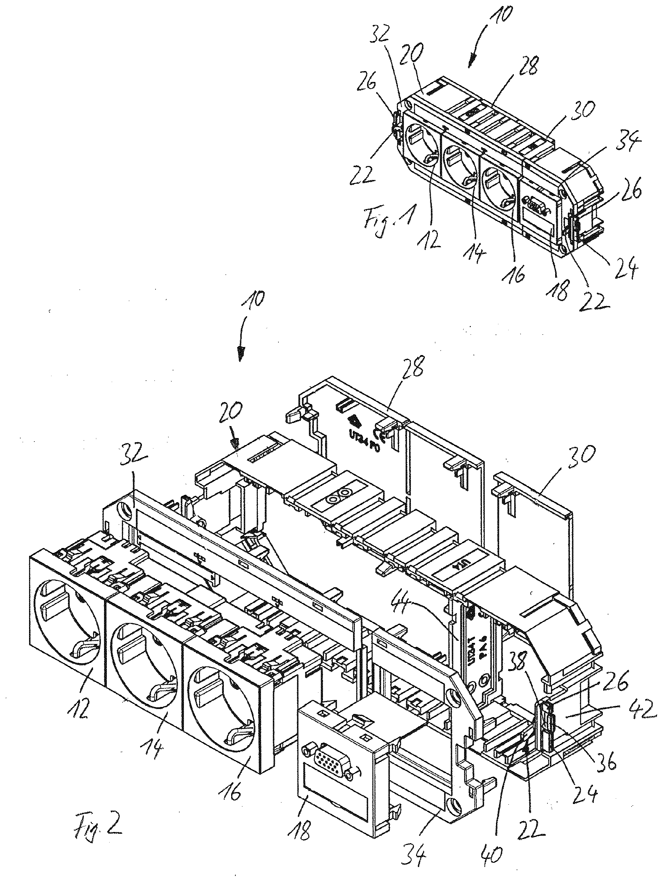

Die Darstellung der Fig. 1 zeigt einen erfindungsgemäßen Gerätebecher 10, der mit insgesamt vier elektrischen Installationsgeräten 12, 14, 16 und 18 versehen ist. Die Installationsgeräte 12, 14, 16 sind jeweils als Schutzkontaktsteckdose ausgebildet, das Installationsgerät 18 als Datensteckdose. Der Gerätebecher 10 weist ein Basisteil 20 auf, das im Wesentlichen als umlaufender Rahmen ausgebildet ist und das an beiden Enden mit jeweils einem Verriegelungshebel 22 und zwei Vorsprüngen 24, 26 zum Einhängen des Gerätebechers in eine nicht dargestellte Rastleiter versehen ist.

Das Basisteil 20 ist auf seiner Unterseite, die in Fig. 1 hinten liegt, mit zwei Bodenabdeckplatten 28, 30 versehen. Auf seiner, in Fig. 1 dem Betrachter zugewandten Vorderseite ist das Basisteil 20 mit zwei Abdeckrahmen 32, 34 versehen, in die die Installationsgeräte 12, 14, 16 bzw. 18 eingesetzt werden.

Die Darstellung der Fig. 2 zeigt den Gerätebecher 10 der Fig. 1 in vergrößerter und auseinandergezogener Darstellung.

Das Basisteil 20 weist, wie bereits erläutert wurde, an seinen beiden Enden jeweils die zwei Vorsprünge, 24, 26 auf, zwischen denen ein Verriegelungsabschnitt 36 des Verriegelungshebels 22 angeordnet ist. Der Verriegelungsabschnitt 36 und infolgedessen auch insgesamt der Verriegelungshebel 22 befinden sich in der Darstellung der Fig. 2 in einer Zwischenstellung, in der der Verriegelungsabschnitt 36 fluchtend zwischen den beiden Vorsprüngen 24, 26 angeordnet ist. Neben dem Verriegelungsabschnitt weist der Hebel 22 eine zylindrische Hebelwelle 38 und einen kreissektorartigen Betätigungsabschnitt 40 auf. Die Hebelwelle 38 ist in einer Stirnwand 42 des Basisteils 20 drehbar gelagert. Die Hebelwelle 38 ist dabei über einen Abschnitt ihrer Länge vollständig vom Material der Stirnwand 42 umgeben, so dass der Hebel 22 unverlierbar an dem Basisteil 20 befestigt ist. Die Drehbarkeit des Hebels 22 relativ zur Stirnwand 42 sowie zusätzlich auch eine Verschiebbarkeit des Hebels 22 relativ zur Stirnwand 42, wie noch erläutert werden wird, ist dabei dadurch sichergestellt, dass der Hebel 22 und die Stirnwand 42 aus unterschiedlichem Kunststoffmaterial gespritzt sind. Die Herstellung des Basisteils 20 und des Hebels 22 erfolgt aber in einem einzigen Spritzgusswerkzeug, das für einen Zweikomponentenspritzvorgang geeignet ausgebildet ist. Ein erster Kunststoff, aus dem das Basisteil 20 gespritzt wird, und ein zweiter Kunststoff, aus dem der Hebel 22 gespritzt wird, schwinden dabei unterschiedlich beim Verfestigen. Dadurch entsteht beim Verfestigen des Basisteils 20 oder beim Verfestigen des Hebels 22 ein Spiel zwischen dem Abschnitt der Hebelwelle 38, der von dem Material der Stirnwand 42 umgeben ist und die Hebelwelle 38 und die Stirnwand 42 verbinden sich nicht. Dies kann, muss aber nicht unbedingt, durch die Auswahl von zwei Kunststoffen unterstützt werden, die sich nicht stoffschlüssig miteinander verbinden. Nach dem Verfestigen kann dadurch die Hebelwelle 38 relativ zur Stirnwand 42 bzw. relativ zu der Durchgangsöffnung in der Stirnwand 42, in der die Hebelwelle 38 aufgenommen ist, verschoben und verdreht werden. Als vorteilhafte Kunststoffmaterialien haben sich Polyamid als Material für das Basisteil 20 sowie Polyoximethylen (POM) für den Hebel 22 erwiesen.

Bei dem erfindungsgemäßen Verfahren zum Herstellen des Gerätebechers, insbesondere zum Spritzgießen des Basisteils 20 mit dem Hebel 22, besteht dabei die Möglichkeit, entweder zuerst das Basisteil 20 und nachfolgend den Hebel 22 in ein und demselben Werkzeug zu spritzen oder zunächst den Hebel 22 und dann das Basisteil 20 zu spritzen. Wesentlich ist, dass unterschiedliche Kunststoffe verwendet werden, die beim Verfestigen unterschiedlich schwinden, so dass sich zwischen diesen beiden Kunststoffen und speziell zwischen dem Basisteil 20 und dem Hebel 22 keine stoffschlüssige Verbindung ausbildet. Dies gewährleistet, dass der Hebel 22 nach dem Abschluss des Zweikomponentenspritzgussverfahrens relativ zum Basisteil 20 bewegt werden kann, insbesondere verdreht und verschoben werden kann.

Das erfindungsgemäß Verfahren ist dabei nicht auf die Herstellung des in Fig. 2 dargestellten Gerätebechers beschränkt, vielmehr können auch Gerätebecher mit dem erfindungsgemäßen Verfahren hergestellt werden, die anders ausgebildete Verriegelungselemente als den Hebel 22 aufweisen.

In Fig. 2 sind weiter die beiden Bodenabdeckplatten 28 und 30 zu erkennen. Die Abdeckplatte 30 ist aus einer identisch zur Abdeckplatte 28 aufgebauten Abdeckplatte dadurch entstanden, dass der in Fig. 2 linke Abschnitt der Abdeckplatte 28 abgebrochen wurde. Die Abdeckplatten 28, 30 sind unterhalb der als Schutzkontaktsteckdosen ausgebildeten Installationsgeräte 12, 14 und 16 angeordnet und sollen verhindern, dass die Leitungsanschlüsse der Schutzkontaktsteckdosen zugänglich sind. Unterhalb des als Datensteckdose ausgebildeten Installationsgeräts 18 ist dahingegen keine Abdeckplatte vorgesehen. Dies vor allem deshalb, damit Datenkabel zu der Datensteckdose in großem Biegeradius geführt werden können.

Die Installationsgeräte 12, 14, 16 sind in dem Abdeckrahmen 32 verankert, der wiederum an dem Basisteil 20 befestigt ist. Das Installationsgerät 18 ist an dem Abdeckrahmen 34 verrastet, das ebenfalls wiederum an dem Basisteil 20 verrastet ist. In dem Basisteil 20 ist noch eine Zwischenwand 44 vorgesehen, die in geeignete Führungen an der Innenseite des Basisteils 20 eingeschoben ist und die den Gerätebecher 10 in einen Abschnitt mit den Schutzkontaktsteckdosen, also den Installationsgeräten 12, 14, 16, und einen Teil mit der Datensteckdose, also dem Installationsgerät 18, teilt.

Der dargestellte Aufbau des Gerätebechers 10 mit dem rahmenförmigen Basisteil 20 sowie den Bodenabdeckplatten 28, 30 und den Abdeckrahmen 32, 34 ermöglicht einen äußerst flexiblen Aufbau des Gerätebechers 10 nach dem Baukastensystem. Speziell sind weniger unterschiedliche Abdeckplatten 28, 30 bzw. Abdeckrahmen 32, 34 erforderlich, um verschiedenste Arten von Installationsgeräten 12, 14, 16, 18 in unterschiedlichen Anzahlen und unterschiedlichen Konfigurationen in das Basisteil 20 einzubauen.

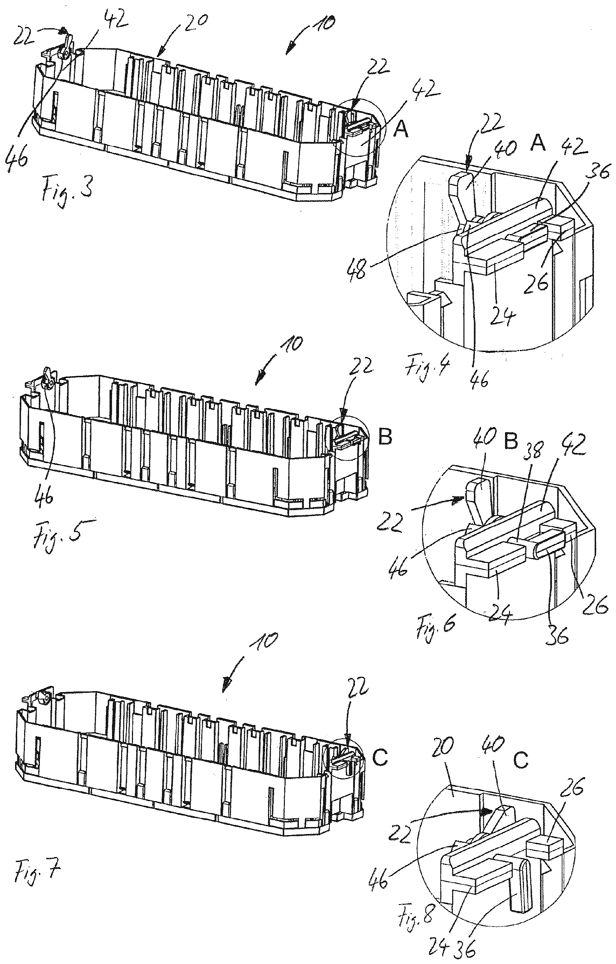

Die Darstellung der Fig. 3 zeigt den Gerätebecher 10 der Fig. 1 von schräg vorne, wobei der besseren Übersichtlichkeit halber keine Installationsgeräte und keine Abdeckrahmen mit eingezeichnet sind. Wie Fig. 3 zu entnehmen ist, weist das Basisteil 20 zwei einander in Längsrichtung des Basisteils 20 gegenüberliegende Stirnwände 42 auf, wobei in den Stirnwänden 42 jeweils ein Hebel 22 angeordnet ist, um den Gerätebecher an Rastleitern einer Unterflurdose oder einer Unterflurkassette zu befestigen.

Die Darstellung der Fig. 3 und die vergrößerte Einzelheit A aus Fig. 3, siehe Fig. 4, zeigen den Hebel 22 in einem Freigabezustand. In diesem Freigabezustand steht der Betätigungsabschnitt 40 annähernd senkrecht nach oben und auf der zum Betätigungsabschnitt 40 gegenüberliegenden Seite der Stirnwand 42 liegt der Verriegelungsabschnitt 36 an der Außenseite der Stirnwand 42 an. Darüber hinaus befindet sich der Hebel 22 in einer Drehstellung, in der der Verriegelungsabschnitt 36 fluchtend zu den beiden Vorsprüngen 24 und 26 angeordnet ist. Es ist ohne weiteres zu erkennen, dass in dieser Freigabestellung der Verriegelungsabschnitt 36 geschützt zwischen den beiden Vorsprüngen 24, 26 angeordnet ist und dass in dieser Freigabestellung die Vorsprünge 24, 26 in Öffnungen einer Rastleiter eingeschoben werden können.

Die Darstellung der Fig. 5 zeigt den Gerätebecher 10 der Fig. 3, wobei sich im Unterschied zur Fig. 3 der Hebel 22 nun in einer Zwischenstellung befindet.

Wie an der vergrößerten Einzelheit B in Fig. 6 zu erkennen ist, liegt der Verriegelungsabschnitt 36 immer noch fluchtend zwischen den beiden Vorsprüngen 24, 26. Auch der Betätigungsabschnitt 40 befindet sich in seiner nach oben abragenden Stellung. Der Betätigungsabschnitt 40 wurde aber in Richtung auf die Stirnwand 42 zu verschoben, so dass nun ein Abschnitt der Hebelwelle 38 auf der in Fig. 6 dem Betrachter zugewandten Seite der Stirnwand 42 über diese hinausragt. Infolgedessen wurde auch der Verriegelungsabschnitt 36 von der Stirnwand 42 weg verschoben und ragt mit seiner außenliegenden, in Fig. 6 rechts angeordneten Begrenzung, über die Stirnflächen der Vorsprünge 245, 26 hinaus. Zwischen einer der Stirnwand 42 zugewandten Rückseite des Verriegelungsabschnitts 36 und der Stirnwand 42 ist nun ein Zwischenraum entstanden, dessen Breite auf die Materialstärke einer Rastleiter abgestimmt ist. Wie noch erläutert werden wird, ist der Verriegelungsabschnitt 36 in der in Fig. 5 und Fig. 6 dargestellten Zwischenstellung so positioniert, dass er vollständig durch eine Öffnung in der Rastleiter hindurchgeschoben ist und nun, durch eine Drehung des Hebels 22, die Öffnung der Rastleiter hintergreifen kann.

Die Darstellung der Fig. 7 zeigt den Gerätebecher 10 der Fig. 3 und 5 in einer Verriegelungsstellung des Hebels 22. Wie der vergrößerten Einzelheit C in Fig. 8 zu entnehmen ist, wurde zum Erreichen der Verriegelungsstellung der Hebel 22 ausgehend von der Zwischenstellung der Fig. 6 im Uhrzeigersinn um 90° gedreht. Der Betätigungsabschnitt 40 liegt nun etwa parallel zu einer Oberkante des Basisteils 20 und der Verriegelungsabschnitt 36 ist nunmehr senkrecht zu den beiden Vorsprüngen 24, 26 angeordnet.

Anhand der Fig. 3 bis 8 ist auf einer Innenseite der Stirnwände 42 jeweils ein ringabschnittsförmiger Kragen 46 zu erkennen. Dieser ringabschnittsförmige Kragen 46 definiert zwei Endanschläge für den Hebel 22 bzw. den Betätigungsabschnitt 40, wenn sich dieser in der Zwischenposition der Fig. 5 und 6 oder der Verriegelungsposition der Fig. 7 und 8 befindet. Ausgehend vom Zustand der Fig. 4 wird der Hebel 22 in Richtung auf die Stirnwand 42 zugeschoben. Der Betätigungsabschnitt 40 muss sich dabei in einer Drehstellung befinden, in der er in den Ausschnitt, der zwischen den Endanschlägen des Kragens 46 gebildet ist, hineingeschoben werden kann. Ist der Hebel 22 eingeschoben und die Position der Fig. 6 erreicht, wird die in Fig. 6 dargestellte Freigabeposition durch den Anschlag des Betätigungsabschnitts 40 an dem in Fig. 6 erkennbaren einen Ende des Kragens 46 definiert. Nach dem Verdrehen des Betätigungsabschnitts 40 definiert dann das andere, in Fig. 6 und 8 nicht zu erkennende Ende des Kragens 46 einen zweiten Endanschlag für den Betätigungsabschnitt 40, der dadurch die Verriegelungsposition der Fig. 8 definiert. Die Hebelwelle 38 weist im Bereich des Kragens 46, also auf der, dem Betrachter abgewandten Seite der Stirnwand 42 in den Fig. 4, 6 und 8, einen kreiszylinderförmigen Abschnitt 48, siehe Fig. 4, mit einem Außendurchmesser auf, der nur geringfügig kleiner ist als der Innendurchmesser des Kragens 46. Der Hebel 22 ist dadurch sicher in dem Kragen 46 geführt, wenn er ausgehend von der Zwischenposition der Fig. 6 in die Verriegelungsposition der Fig. 8 gedreht wird.

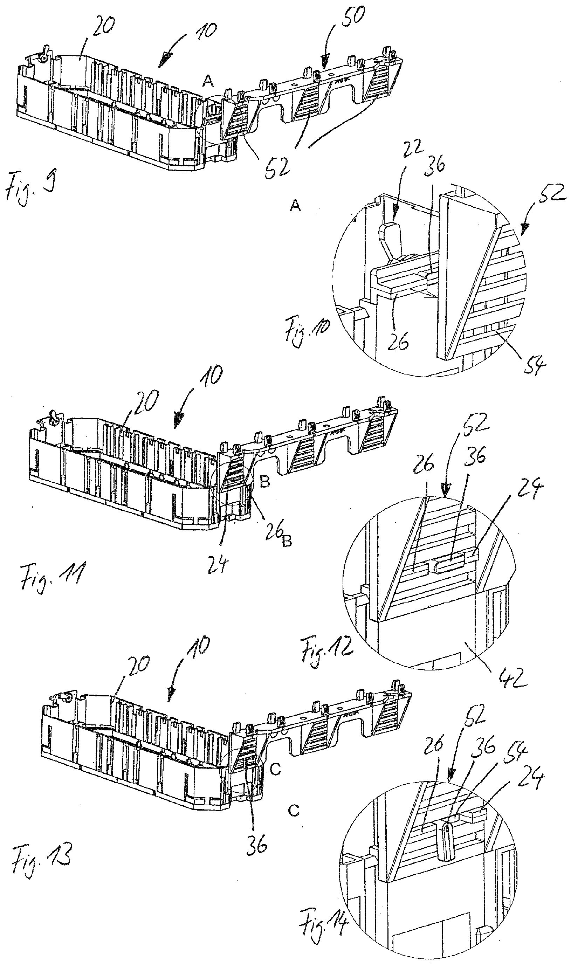

Die Darstellung der Fig. 9 zeigt den Gerätebecher 10 der Fig. 3 sowie einen Halteabschnitt 50 einer im Übrigen nicht dargestellten Unterflurkassette mit insgesamt drei Rastleitern 52. Die Rastleitern 52 weisen jeweils horizontal angeordnete längliche Öffnungen auf, die in ihren Abmessungen auf die Dicke der Vorsprünge 24, 26 am Basisteil 20 des Gerätebechers 10 abgestimmt sind.

Die vergrößerte Einzelheit A in Fig. 10 zeigt eine der Rastleitern 52 mit mehreren, parallel zueinander und untereinander angeordneten Schlitzen oder Öffnungen 54. Die Höhe bzw. Dicke der Vorsprünge 24, 26 und auch die Höhe des Verriegelungsabschnitts 36 des Hebels 22 sind auf eine Höhe der Öffnungen 54 der Rastleiter 52 abgestimmt. Die Vorsprünge 26 können in die Öffnungen 54 eingeschoben werden und sind dann in diesen Öffnungen 54 annähernd spielfrei aufgenommen. In der Darstellung der Fig. 9 und der Fig. 10 befindet sich der Hebel 22 in seiner Freigabestellung, in der also der Verriegelungsabschnitt 36 fluchtend zwischen den beiden Vorsprüngen 24, 26 angeordnet ist, siehe auch Fig. 3, Fig. 4.

Ausgehend von dem Zustand der Fig. 9 werden dann die Vorsprünge 24, 26 des Basisteils 20 in eine der Öffnungen 54 der Rastleiter 52 eingeschoben. Im Zustand der Fig. 11 befindet sich der Hebel 22 in seiner Zwischenstellung, siehe auch Fig. 5 und Fig. 6. Der Hebel 22 wurde dabei bereits in Richtung auf die Rastleiter 52 verschoben, so dass, siehe Fig. 12, wie die vergrößerte Einzelheit B aus Fig. 11 zeigt, der Verriegelungsabschnitt 36 noch fluchtend zwischen den Vorsprüngen 24, 26 angeordnet ist, zwischen sich und der Stirnwand 42 aber bereits einen Zwischenraum bildet, der der Materialstärke der Rastleiter 52 entspricht. Ausgehend von der in Fig. 11 und 12 dargestellten Zwischenstellung kann der Hebel 22 nun verdreht werden, bis er die in Fig. 13 und Fig. 14 dargestellte Verriegelungsstellung erreicht, siehe auch Fig. 7 und Fig. 8. In dieser Verriegelungsstellung ist der Verriegelungsabschnitt 36 senkrecht zu den Vorsprüngen 24, 26 angeordnet und hintergreift dadurch die Öffnungen 54 in der Rastleiter 52. Das Basisteil 20 bzw. der Gerätebecher 10 ist dadurch unverlierbar an der Rastleiter 52 befestigt. Auch wenn auf den Gerätebecher 10 große Kräfte ausgeübt werden, beispielsweise beim Einstecken eines Schutzkontaktsteckers in ein im Gerätebecher 10 vorgesehenes elektrisches Installationsgerät, steht nicht zu befürchten, dass sich die Vorsprünge 24, 26 aus der Öffnung 54 der Rastleiter 52 herausbewegen, selbst wenn der Gerätebecher 10 geringfügig durchgebogen wird. Das Herausrutschen der Vorsprünge 24, 26 aus der Öffnung 54 wird zuverlässig durch den Verriegelungsabschnitt 36 des Hebels 22 verhindert.

Es ist festzustellen, dass zum Einschieben der Vorsprünge 24, 26 sowie des Verriegelungsabschnitts 36 in die Öffnung 54 der Rastleiter 52 weder die Rastleiter 52 noch die Vorsprünge 24, 26 oder der Verriegelungsabschnitt 36 federnd nachgeben müssen. Es ist dadurch möglich, den erfindungsgemäßen Gerätebecher 10 an Rastleitern aus unterschiedlichen Materialien, beispielsweise Kunststoff oder auch Metall, einzusetzen. Auch bei Rastleitern aus Metall, die unter Belastung nicht oder lediglich geringfügig nachgeben, können die Vorsprünge 24, 26 sehr passgenau auf die Höhe der Öffnungen 54 abgestimmt werden. Dies führt zu einer sehr präzisen Positionierung und einem sicheren Halt des Gerätebechers 10 an der Rastleiter 52. Die Öffnungen 54 sind in Form von horizontal angeordneten Schlitzen ausgebildet, können im Rahmen der Erfindung aber auch eine andere Form haben, solange der Verriegelungsabschnitt 36 mittels einer Drehung die Öffnung hintergreifen kann. Selbstverständlich können für die Vorsprünge 24, 26 und den Verriegelungsabschnitt auch separate Öffnungen vorgesehen sein und auch die Anordnung und Ausbildung der Vorsprünge 24, 26 und der Verriegelungsabschnitt 36 können im Rahmen der Erfindung anders gewählt werden.

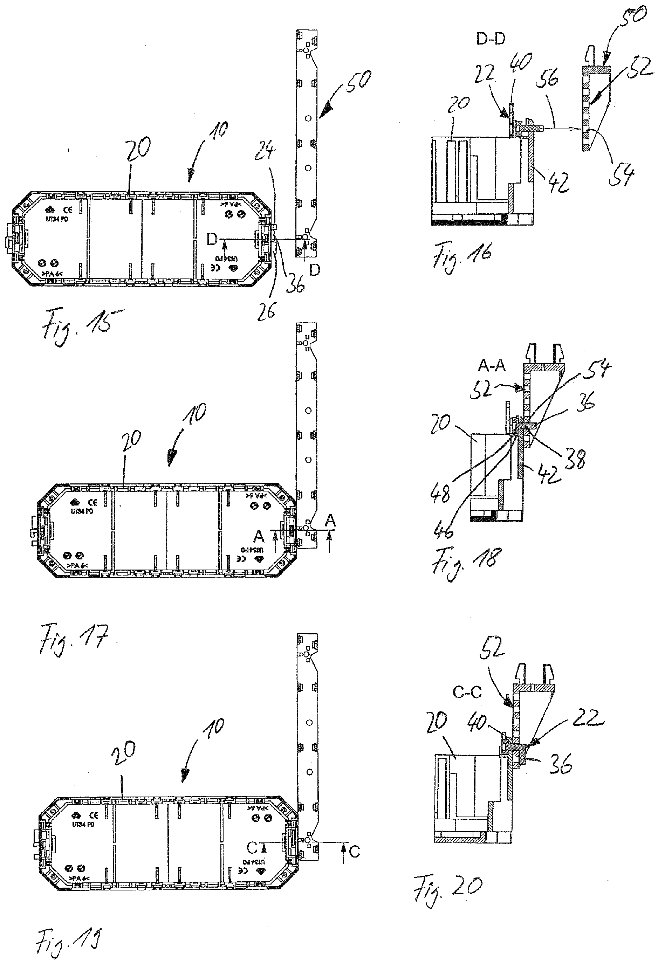

Die Darstellung der Fig. 15 zeigt den Gerätebecher 10 der Fig. 9 vor dem Einsetzen in das Rastleiterbauteil 50, wobei eine Ansicht von oben gewählt wurde. Wie zu erkennen ist, befindet sich der Hebel in der Freigabestellung, in der der Verriegelungsabschnitt 36 fluchtend zwischen den beiden Vorsprüngen 24, 26 an der Stirnwand des Basisteils 20 angeordnet ist.

Die Darstellung der Fig. 16 zeigt die entsprechende Ansicht auf die Schnittebene D-D in Fig. 15. Ein Pfeil 56 in Fig. 16 soll darstellen, dass das Basisteil 20 in die Öffnung 54 der Rastleiter 52 eingeschoben werden soll.

Fig. 17 zeigt den Gerätebecher 10 im Zustand der Fig. 11 von oben. Der Hebel 22 befindet sich nun in seiner Zwischenstellung, wie auch der Ansicht auf die Schnittebene A-A in Fig. 18 zu entnehmen ist. Ausgehend von der Freigabestellung der Fig. 16 wurde der Hebel 22 in Richtung auf die Stirnwand 42 gedrückt, so dass in der Zwischenstellung nun der Abschnitt 48 der Hebelwelle 38 in dem Kragen 46 an der Stirnwand 42 aufgenommen ist. Der Abschnitt der Hebelwelle 38 mit geringerem Durchmesser ist dadurch abschnittsweise in der Öffnung 54 der Rastleiter 52 angeordnet und der Verriegelungsabschnitt 36 liegt, vom Basisteil 20 bzw. der Stirnwand 42 aus gesehen, hinter der Öffnung 54.

Die Darstellung der Fig. 19 zeigt den Gerätebecher 10 der Fig. 13 in einer Ansicht von oben. Wie der Ansicht auf die Schnittebene C-C in Fig. 20 zu entnehmen ist, hintergreift der Verriegelungsabschnitt 36 nun die Rastleiter 52 und das Basisteil 20 ist unverlierbar an der Rastleiter 52 gesichert.

Ausgehend vom Zustand der Fig. 20 muss lediglich der Betätigungsabschnitt 40 des Hebels 22 in die Zwischenposition der Fig. 18 gedreht werden. Gegebenenfalls muss dann noch der Betätigungsabschnitt 40 in Fig. 18 nach links gezogen werden, so dass die Freigabestellung der Fig. 16 erreicht wird. Das Basisteil 20 kann nun in einfacher Weise von der Rastleiter 52 entfernt werden, indem die Vorsprünge 24, 26 wieder aus der Öffnung 54 herausgezogen werden. Das Einsetzen und Entnehmen des Gerätebechers 10 bzw. des Basisteils 20 in die Rastleiter 52 kann dabei wiederholt durchgeführt werden, ohne dass ein Materialverschleiß, wie dies bei federnden Rasthaken der Fall wäre, zu befürchten ist.

## Patentansprüche

1. Gerätebecher (10) für elektrische Installationsgeräte (12, 14, 16, 18) mit jeweils wenigstens einem Vorsprung (24, 26) an gegenüberliegenden Stirnwänden (42) des Gerätebechers (10), wobei die Vorsprünge (24, 26) zum Einhängen des Gerätebechers (10) in Montageöffnungen (54) von Rastleitern (52) einer Unterflurkassette vorgesehen sind, **dadurch gekennzeichnet, dass** an wenigstens einer Stirnwand (42) des Gerätebechers (10) im Bereich des wenigstens einen Vorsprungs (24, 26) ein relativ zum Gerätebecher drehbarer Hebel (22) zum Verriegeln des Gerätebechers an Rastleitern (52) vorgesehen ist, wobei ein Verriegelungsabschnitt (36) des Hebels (22) in einer ersten Freigabestellung fluchtend zu dem wenigstens einen Vorsprung (24, 26) angeordnet ist und der Verriegelungsabschnitt (36) des Hebels (22) in einer Zwischenstellung noch fluchtend zwischen den Vorsprüngen (24, 26) angeordnet ist, zwischen sich und der Stirnwand (42) aber bereits einen Zwischenraum bildet und in einer zweiten Verriegelungsstellung schräg oder senkrecht zu dem Vorsprung (24, 26) angeordnet ist um die Montageöffnung (54) der Unterflurkassette zu hintergreifen.

2. Gerätebecher nach Anspruch 1, **dadurch gekennzeichnet, dass** eine Hebelwelle (38) im Wesentlichen parallel zu einer von dem ersten Ende zum zweiten Ende des Gerätebechers (10) verlaufenden Längsrichtung angeordnet ist.

3. Gerätebecher nach Anspruch 1 oder 2, **dadurch gekennzeichnet, dass** der Hebel (22) relativ zum Gerätebecher (10) parallel zu dessen Längsachse verschiebbar ist.

4. Gerätebecher nach wenigstens einem der vorstehenden Ansprüche, **dadurch gekennzeichnet, dass** an wenigstens einem Ende des Gerätebechers (10) zwei senkrecht zur Längsrichtung nebeneinander angeordnete Vorsprünge (24, 26) vorgesehen sind, wobei der Verriegelungsabschnitt (36) in der Freigabestellung fluchtend zwischen den beiden Vorsprüngen (24, 26) angeordnet ist.

5. Gerätebecher nach wenigstens einem der vorstehenden Ansprüche, **dadurch gekennzeichnet, dass** die Hebelwelle (38) in einer Stirnwand (42) des Gerätebechers (10) drehbar gelagert ist.

6. Gerätebecher nach Anspruch 5, **dadurch gekennzeichnet, dass** die Hebelwelle (38) in einem Führungsabschnitt auf ihrem gesamten Umfang von einem einstückigen Abschnitt der Stirnwand (42) umgeben ist.

7. Gerätebecher nach Anspruch 5 oder 6, **dadurch gekennzeichnet, dass** an einer, dem Innenraum des Gerätebechers zugewandten Seite der Stirnwand (42) ein ringabschnittsförmiger Kragen (46) vorgesehen ist, der sich über weniger als 360 Winkelgrad erstreckt und der für einen Betätigungsabschnitt (40) des Hebels (22) zwei, eine Drehung des Hebels (22) begrenzende Endanschläge definiert.

8. Gerätebecher nach Anspruch 7, **dadurch gekennzeichnet, dass** in dem Kragen (46) ein kreiszylinderförmiger Abschnitt (48) der Hebelwelle (38) mit einem ersten Durchmesser aufgenommen ist, an den sich ein ebenfalls kreiszylinderförmiger Abschnitt der Hebelwelle (38) mit einem zweiten, kleineren Durchmesser anschließt, der in der Stirnwand (42) des Gerätebechers (10) drehbar gelagert ist.

9. Gerätebecher nach wenigstens einem der vorstehenden Ansprüche, **dadurch gekennzeichnet, dass** der Betätigungsabschnitt (40) des Hebels (22) einen sich ausgehend von der Hebelwelle (38) im Wesentlichen senkrecht zur Hebelwelle (38) erstreckenden, kreissektorartigen Abschnitt aufweist.

10. Verfahren zum Herstellen eines Gerätebechers für elektrische Installationsgeräte mittels Kunststoffspritzguss gemäß Anspruch 1, mit folgenden Schritten: Spritzgießen eines Basisteils (20) des Gerätebechers (10) aus einem ersten Kunststoff mittels eines Spritzgusswerkzeugs; Spritzgießen wenigstens eines drehbaren Hebels des Gerätebechers aus einem zweiten Kunststoff mittels des Spritzgusswerkzeugs, so dass der drehbare Hebel im Bereich eines Führungsabschnitts über seinen gesamten Umfang von dem ersten Kunststoff umgeben ist, wobei die beiden Kunststoffe beim Verfestigen unterschiedlich stark schwinden, so dass nach dem Verfestigen des ersten und des zweiten Kunststoffs der drehbare Hebel im Führungsabschnitt relativ zum Basisteil (20) beweglich ist.

11. Verfahren nach Anspruch 10, **gekennzeichnet durch** Spritzgießen des Basisteils (20) vor dem drehbaren Hebel.

12. Verfahren nach Anspruch 11, **dadurch gekennzeichnet, dass** der drehbare Hebel als Hebel (22) und der Führungsabschnitt als Hebelwelle (38) ausgebildet ist, wobei zunächst das Basisteil (20) mit einer kreisrunden Durchgangsöffnung gespritzt wird und wobei beim Spritzen des Hebels (22) das zweite Kunststoffmaterial in die Durchgangsöffnung eintritt und dort wenigstens einen Abschnitt der Hebelwelle (38) bildet.

13. Verfahren nach Anspruch 10, **gekennzeichnet durch** Spritzgießen des drehbaren Hebels vor dem Basisteil (20).

14. Verfahren nach Anspruch 13, **dadurch gekennzeichnet, dass** der drehbare Hebel als Hebel (22) und der Führungsabschnitt als Hebelwelle (38) ausgebildet ist, wobei zunächst der Hebel (22) mit der kreiszylindrischen Hebelwelle (38) gespritzt wird und dann beim Spritzen des Basisteils (20) die Hebelwelle (38) mit dem ersten Kunststoff umgeben wird.

15. Verfahren nach wenigstens einem der Ansprüche 10 bis 14, **dadurch gekennzeichnet, dass** der erste Kunststoff ein Polyamid und der zweite Kunststoff ein Polyoxymethylen (POM) ist.

16. Verfahren nach wenigstens einem der Ansprüche 10 bis 15, **dadurch gekennzeichnet, dass** sich das erste Kunststoffmaterial nicht mit dem zweiten Kunststoffmaterial verbindet.

## Claims

1. Device holder cup (10) for electrical installation devices (12, 14, 16, 18) with in each case at least one protrusion (24, 26) on opposite end walls (42) of the device holder cup (10), wherein the protrusions (24, 26) are provided for inserting the device holder cup (10) in mounting openings (54) of click ladders (52) of an underfloor cassette, **characterized in that** on at least one end wall (42) of the device holder cup (10) in the vicinity of the at least one protrusion (24, 26) is provided a lever (22) rotatable relative to the device holder cup for locking the device holder cup on click ladders (52), wherein a locking section (36) of the lever (22) in a first release position is disposed flush to the at least one protrusion (24, 26), and the locking section (36) of the lever (22) in an intermediate position is still disposed flush between the protrusions (24, 26), however, between said locking section and the end wall (42) an intermediate space is formed and in a second locking position said locking position is disposed obliquely or perpendicular to the protrusion (24, 26), in order to engage behind the mounting opening (54) of the underfloor cassette.

2. Device holder cup according to claim 1, **characterized in that** a lever shaft (38) is disposed essentially in parallel to a longitudinal direction extending from the first end to the second end of the device holder cup (10).

3. Device holder cup according to claim 1 or 2, **characterized in that** the lever (22) is displaceable relative to the device holder cup (10) in parallel to the longitudinal axis thereof.

4. Device holder cup according to at least one of the preceding claims, **characterized in that** on at least one end of the device holder cup (10) two protrusions (24, 26) in juxtaposition perpendicular to the longitudinal direction are provided, wherein the locking section (36) in the release position is disposed flush between the two protrusions (24, 26).

5. Device holder cup according to at least one of the preceding claims, **characterized in that** the lever shaft (38) is rotatably mounted in an end wall (42) of the device holder cup (10).

6. Device holder cup according to claim 5, **characterized in that** the lever shaft (38) is enclosed, in a guiding section, on its entire circumference by a one-piece section of the end wall (42).

7. Device holder cup according to claim 5 or 6, **characterized in that** on one side of the end wall (42), facing the interior space of the device holder cup, an annular sectional collar (46) is provided which extends over less than 360 degrees of angle and which defines two end stops for an actuating section (40) of the lever (22), limiting rotation of the lever (22).

8. Device holder cup according to claim 7, **characterized in that** in the collar (46) is received a circular cylindrical section (48) of the lever shaft (38) having a first diameter which is adjoined by a likewise circular cylindrical section of the lever shaft (38) having a second, smaller diameter and rotatably mounted in the end wall (42) of the device holder cup (10).

9. Device holder cup according to at least one of the preceding claims, **characterized in that** the actuating section (40) of the lever (22) includes a circle segment-type section extending from the lever shaft (38) essentially perpendicular to the lever shaft (38).

10. Method for producing a device holder cup for electrical installation devices by means of plastics injection moulding according to claim 1, comprising the steps: injection moulding of a base part (20) of the device holder cup (10) from a first plastic using an injection moulding tool; injection moulding of at least one rotatable lever of the device holder cup from a second plastic using the injection moulding tool such that the rotatable lever, in the vicinity of a guiding section, is enclosed on its entire circumference by the first plastic, wherein the two plastics during solidification are subject to shrinkage to a different extent so that, after solidification of the first plastic and the second plastic, the rotatable lever in the guiding section is movable relative to the base part (20).

11. Method according to claim 10, **characterized by** injection moulding of the base part (20) prior to the rotatable lever.

12. Method according to claim 11, **characterized in that** the rotatable lever is embodied as lever (22) and the guiding section is embodied as lever shaft (38), wherein initially the base part (20) having a circular through opening is injection moulded, and wherein during injection moulding of the lever (22) the second plastics material enters into the through opening and forms at least one section of the lever shaft (38) therein.

13. Method according to claim 10, **characterized by** injection moulding of the rotatable lever prior to the base part (20).

14. Method according to claim 13, **characterized in that** the rotatable lever is embodied as lever (22) and the guiding section is embodied as lever shaft (38), wherein initially the lever (22) having the circular cylindrical lever shaft (38) is injection moulded, and then during injection moulding of the base part (20) the lever shaft (38) is enclosed by the first plastic.

15. Method according to at least one of the claims 10 to 14, **characterized in that** the first plastic is a polyamide and the second plastic is a polyoxymethylene (POM).

16. Method according to at least one of the claims 10 to 15, **characterized in that** the first plastics material does not combine with the second plastics material.

## Revendications

1. Boîtier d'appareillage (10) pour appareillages d'installation (12, 14, 16, 18) électriques, comprenant respectivement au moins une partie saillante (24, 26) au niveau de parois frontales (42) opposées du boîtier d'appareillage (10), les parties saillantes (24, 26) étant conçues pour accrocher le boîtier d'appareillage (10) dans des ouvertures de montage (54) d' échelles à encliquetage (52) d'une cassette encastrée de sol, **caractérisé en ce qu'**un levier (22) rotatif par rapport au boîtier d'appareillage, servant à verrouiller le boîtier d'appareillage à des échelles à encliquetage (52), se trouve au niveau d'au moins une paroi frontale (42) du boîtier d'appareillage (10) dans la zone de l'au moins une partie saillante (24, 26), une portion de verrouillage (36) du levier (22), dans une première position de libération, étant disposée à fleur de l'au moins une partie saillante (24, 26) et la portion de verrouillage (36) du levier (22), dans une position intermédiaire, étant encore disposée à fleur entre les parties saillantes (24, 26), en formant toutefois déjà un espace intermédiaire entre elle-même et la paroi frontale (42) et, dans une deuxième position de verrouillage, étant disposée en biais ou perpendiculairement par rapport à la partie saillante (24, 26) afin de venir en prise par l'arrière avec l'ouverture de montage (54) de la cassette encastrée de sol.

2. Boîtier d'appareillage selon la revendication 1, **caractérisé en ce qu'**un arbre de levier (38) est disposé sensiblement en parallèle avec une direction longitudinale qui s'étend de la première extrémité à la deuxième extrémité du boîtier d'appareillage (10).

3. Boîtier d'appareillage selon la revendication 1 ou 2, **caractérisé en ce que** le levier (22) peut coulisser par rapport au boîtier d'appareillage (10) parallèlement à son axe longitudinal.

4. Boîtier d'appareillage selon au moins l'une des revendications précédentes, **caractérisé en ce que** deux parties saillantes (24, 26) disposées l'une à côté de l'autre perpendiculairement à la direction longitudinale se trouvent à au moins une extrémité du boîtier d'appareillage (10), la portion de verrouillage (36), dans la position de libération, étant disposée à fleur entre les deux parties saillantes (24, 26).

5. Boîtier d'appareillage selon au moins l'une des revendications précédentes, **caractérisé en ce que** l'arbre de levier (38) est monté à rotation dans une paroi frontale (42) du boîtier d'appareillage (10).

6. Boîtier d'appareillage selon la revendication 5, **caractérisé en ce que** l'arbre de levier (38), dans une portion de guidage, est entouré sur tout son pourtour par une portion d'un seul tenant de la paroi frontale (42).

7. Boîtier d'appareillage selon la revendication 5 ou 6, **caractérisé en ce qu'**au niveau d'un côté de la paroi frontale (42) qui fait face à l'intérieur du boîtier d'appareillage se trouve une collerette (46) en forme de segment d'anneau, laquelle s'étend sur moins de 360 degrés et laquelle définit, pour une portion d'actionnement (40) du levier (22), deux butées finales qui limitent une rotation du levier (22).

8. Boîtier d'appareillage selon la revendication 7, **caractérisé en ce que** dans la collerette (46) est accueillie une portion cylindrique circulaire (48) de l'arbre de levier (38) ayant un premier diamètre, à laquelle est rattachée une portion également cylindrique circulaire de l'arbre de levier (38) ayant un deuxième diamètre, plus petit, qui est montée à rotation dans la paroi frontale (42) du boîtier d'appareillage (10).

9. Boîtier d'appareillage selon au moins l'une des revendications précédentes, **caractérisé en ce que** la section d'actionnement (40) du levier (22) possède une portion en segment de cercle qui s'étend à partir de l'arbre de levier (38), sensiblement perpendiculairement à l'arbre de levier (38).

10. Procédé de fabrication d'un boîtier d'appareillage pour appareillages d'installation électriques au moyen du moulage par injection de matière plastique selon la revendication 1, comprenant les étapes suivantes : moulage par injection d'une partie de base (20) du boîtier d'appareillage (10) en une première matière plastique au moyen d'un outil de moulage par injection ; moulage par injection d'au moins un levier rotatif du boîtier d'appareillage en une deuxième matière plastique au moyen de l'outil de moulage par injection, de sorte que le levier rotatif est entouré par la première matière plastique sur tout son pourtour dans la zone d'une portion de guidage, les deux matières plastiques se contractant à des niveaux différents lors de la solidification, de sorte qu'après la solidification de la première et de la deuxième matière plastique, le levier rotatif est mobile par rapport à la partie de base (20) dans la portion de guidage.

11. Procédé selon la revendication 10, **caractérisé par** le moulage par injection de la partie de base (20) avant le levier rotatif.

12. Procédé selon la revendication 11, **caractérisé en ce que** le levier rotatif est réalisé sous la forme d'un levier (22) et la portion de guidage sous la forme d'un arbre de levier (38), la partie de base (20) pourvue d'une ouverture de passage circulaire ronde étant tout d'abord injectée et, lors de l'injection du levier (22), la deuxième matière plastique pénètre dans l'ouverture de passage et y forme au moins une portion de l'arbre de levier (38).

13. Procédé selon la revendication 10, **caractérisé par** le moulage par injection du levier rotatif avant la partie de base (20).

14. Procédé selon la revendication 13, **caractérisé en ce que** le levier rotatif est réalisé sous la forme d'un levier (22) et la portion de guidage sous la forme d'un arbre de levier (38), le levier (22) pourvu de l'arbre de levier (38) cylindrique circulaire étant tout d'abord injecté et ensuite, lors de l'injection de la partie de base (20), l'arbre de levier (38) étant entouré par la première matière plastique.

15. Procédé selon au moins l'une des revendications 10 à 14, **caractérisé en ce que** la première matière plastique est un polyamide et la deuxième matière plastique un polyoxyméthylène (POM).

16. Procédé selon au moins l'une des revendications 10 à 15, **caractérisé en ce que** la première matière plastique ne se lie pas avec la deuxième matière plastique.
